Europäisches Patentamt

European Patent Office

Office européen des brevets

(19)

(11) Veröffentlichungsnummer : **0 128 177 B1**

## (12) EUROPÄISCHE PATENTSCHRIFT

(45) Veröffentlichungstag der Patentschrift :
**04.03.87**

(21) Anmeldenummer : **84900047.6**

(22) Anmeldetag : **14.12.83**

(86) Internationale Anmeldenummer :
**PCT/EP 83/00336**

(87) Internationale Veröffentlichungsnummer :
**WO/8402390 (21.06.84 Gazette 84/15)**

(51) Int. Cl.⁴ : **F 27 B 9/16, C 21 D 9/00, B 65 G 25/02, F 26 B 15/06**

(54) **WÄRMEBEHANDLUNGSOFEN MIT EINER KREISRINGFÖRMIGEN TRANSPORTBAHN FÜR DIE WERKSTÜCKE.**

(30) Priorität : **15.12.82 DE 3246371**

(43) Veröffentlichungstag der Anmeldung :
**19.12.84 Patentblatt 84/51**

(45) Bekanntmachung des Hinweises auf die Patenterteilung : **04.03.87 Patentblatt 87/10**

(84) Benannte Vertragsstaaten :
**AT DE FR GB SE**

(56) Entgegenhaltungen :
**DE-A- 2 004 484**
**DE-A- 2 822 915**
**FR-A- 9 914 413**
**GB-A- 1 055 868**
**US-A- 2 530 595**
**US-A- 3 260 350**

(73) Patentinhaber : **Ruhrgas Aktiengesellschaft**
**Huttropstrasse 60 Postfach 10 32 52**
**D-4300 Essen 1 (DE)**

(72) Erfinder : **GILLHAUS, Horst**
**Niederhofer Kohlenweg 49**
**D-4600 Dortmund 30 (DE)**

(74) Vertreter : **Zenz, Joachim Klaus, Dipl.-Ing. et al**
**ZENZ & HELBER Patentanwälte Am Ruhrstein 1**
**D-4300 Essen 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Ofen zur Wärmebehandlung von Werkstücken, bei dem in einem Wärmebehandlungsraum eine etwa kreisringförmige Transportbahn mit bewegbaren Tragelementen konzentrisch um eine Vertikalachse angeordnet ist, wobei die Werkstücke während der Wärmebehandlung unter Auflage auf den Tragelementen entlang der Transportbahn transportiert werden.

Ähnliche Wärmebehandlungsöfen sind als Drehherdöfen mit zylindrischem oder eckigem Ofenraum und rotierendem Rost beispielsweise aus der DE-A-28 22 915 bekannt. Die zu behandelnden Teile werden auf den sich langsam drehenden Ofenrost abgesetzt und wandern mit diesem durch die verschiedenen Beheizungszonen. Der sich langsam drehende Ofenrost ist außerhalb des Ofens gelagert und wird von einem ebenfalls außerhalb des Ofens angeordneten Antrieb gedreht. Im allgemeinen werden die Drehherdöfen taktweise betrieben und es kann immer nur dann eine neue Charge eingesetzt werden, wenn vorher eine Charge entnommen wurde. Die neue Charge fährt dann vom Einlauf schrittweise durch die Aufheizzone, die Zone zur Konstanthaltung der gewünschten Temperatur und dann zur Entnahmeposition.

Diese Drehherdöfen haben sich zur Wärmebehandlung bewährt. Jedoch ist es nicht möglich, von der vorgegebenen Taktzeit abzuweichen. Daher wird bei derartigen Drehherdöfen immer eine bestimmte Zeit für den Durchlauf einer bestimmten Materialmenge benötigt, da durch den Drehherdofen die Taktzeit für die Wärmebehandlung bestimmt wird. Es ist schwierig, die Charge in Drehherdöfen einer Gasbehandlung, z. B. einer Nitrierung zu unterwerfen, da meist die Verweilzeit in der Temperaturhaltezone für eine solche Gasbehandlung nicht ausreicht. Es wirkt sich ferner bei Drehherdöfen ungünstig aus, daß die fertigbehandelte Charge auf dem heißen Rost in unmittelbarer Nachbarschaft der neu eingebrachten kalten Charge entnommen wird. Die thermische Trennung zwischen Einlauf- und Auslaufstelle läßt sich bei Drehherdöfen nur schwer und unter Verwendung eines Leerplatzes und/oder der Anordnung von Strahlrohren erreichen.

Ähnliche Probleme ergeben sich bei einem Wärmebehandlungsofen der eingangs genannten Art, der aus der FR-A-991 413 bekannt ist. Bei diesem Ofen sind die Werkstücke einem ringförmigen Ofenboden aufgesetzt, der als Ganzer durch ein Antriebssystem taktweise angehoben, um einen bestimmten Winkelsektor in Richtung der kreisringförmigen Transportbahn gedreht und wieder abgesenkt wird.

Aus der US-A-2 530 595 ist ein sogenannter Vorkammerofen zur Wärmebehandlung von keramischen Werkstücken bekannt, bei dem die Werkstücke in mehreren separaten Etagen mittels eines Hubbalkensystems entlang einer geraden Transportbahn durch einen Tunnelofen der Übergabestelle eines anschließenden Drehherdofens zugeführt werden. An der Übergabestelle werden die Werkstücke durch eine gabelförmige, heb- und senkbare sowie drehbare Aufgabevorrichtung vom Hubbalkensystem abgenommen und den in der gleichen Ebene entlang einer Kreisbahn fest angeordneten Tragelementen des Drehherdofens aufgesetzt. Nach Durchlaufen des Drehherdofens und Beendigung der Wärmebehandlung werden die Werkstücke von einer entsprechenden gabelförmigen Ausgabevorrichtung in eine gegenläufige Transportbahn des Tunnelofens zurückgesetzt und in der Gegenrichtung mittels eines zweiten Hubbalkensystems transportiert. Dieser bekannte Vorkammerofen bedingt eine große Grundfläche, ein entsprechend großes Ofenvolumen und eine vergleichsweise große Anzahl unterschiedlicher und komplizierter Transportmechanismen für die zu behandelnden Werkstücke.

Aus der DE-A-2 004 484 ist eine Sammel- und Transportvorrichtung für Serienteile bekannt. Bei dieser Vorrichtung ist an einem Innenzylinder eine spiralförmige Schiene angeordnet. Zylinder mit zugehöriger Schiene können zyklisch angehoben, gedreht, abgesenkt und in die Ausgangsstellung zurückgedreht werden. Durch Zusammenwirken dieser bewegten Schiene mit einer feststehenden, an einem Außenzylinder befestigten Schiene können an die Schienenformen genau angepaßte Serienteile schrittweise von unten nach oben transportiert werden. Zum Transport von Teilen unterschiedlicher Abmessungen und Querschnitte, wie sie in Öfen üblicherweise wärmebehandelt werden, ist diese bekannte Transportvorrichtung ungeeignet.

Der Erfindung liegt die Aufgabe zugrunde, den Wärmebehandlungsofen der eingangs genannten Art für Gasbehandlungsprozesse geeignet zu machen und derart gegensätzliche Bedingungen, wie kleines Ofenvolumen, geringer Energieeinsatz und hoher Werkstückdurchsatz zu erfüllen.

Diese Aufgabe wird erfindungsgemäß dadurch gelöst, daß wenigstens zwei Gruppen von etwa stabförmigen Tragelementen an verschiedenen Trägeranordnungen befestigt und derart angeordnet und verteilt sind, daß sie wenigstens eine wendelförmige Transportbahn mit vertikaler Zentralachse bilden, und daß die beiden Trägeranordnungen mit den ihnen jeweils zugeordneten Tragelementen sowohl vertikal als auch in Umfangrichtung der wendelförmigen Transportbahn relativ zueinander derart bewegbar sind, daß die Werkstücke abwechselnd von Tragelementen der einen Gruppe und Tragelementen der anderen Gruppe abgestützt und schrittweise entlang der Transportbahn transportiert werden.

Die wendelförmige Anordnung gewährleistet eine optimale Raumausnutzung im zylindrischen Innenraum des Ofens und eine auf alle Werkstücke im Ofen gleichmäßig wirkende Wärmeverteilung. Die Energieverluste bei der Zu- und Abführung der Werkstücke in den und aus dem Ofen können minimiert werden.

Gemäß einem bevorzugten Ausführungsbeispiel der Erfindung ist vorgesehen, daß die stabförmigen Tragelemente der einen Gruppe im Bereich eines Innenumfangs der Transportbahn an der zugehörigen Trägeranordnung befestigt sind und etwa radial nach außen verlaufen und die stabförmigen Tragelemente der anderen Gruppe im Bereich eines Außenumfangs der Transportbahn an der zugehörigen Trägeranordnung befestigt sind und etwa radial nach innen verlaufen. Die Stäbe der beiden Gruppen sind in gegenseitigem Winkelabstand angeordnet. Der Winkelabstand zwischen zwei benachbarten Stäben jeder Gruppe ist vorzugsweise so groß, daß die Stäbe gruppenweise in eine kammartig ineinandergreifende Lage gebracht werden können. Bei radial angeordneten Stäben sind vorzugsweise mehrere Stäbe zu gabelförmigen Elementen zusammengefaßt.

Ein besonders hoher Nutzungsgrad und eine Optimierung des Ofenvolumens lassen sich dadurch erreichen, daß die stabförmigen Tragelemente in mehreren Ebenen übereinander angeordnet sind und beispielsweise eine nicht stetige (terassenförmige) Schraubenwendel bilden. Von den zwei in einer Transportbahn zusammenwirkenden Gruppen von Stabelementen kann entweder eine oder beide sowohl Hub- als auch Drehbewegungen ausführen. Es ist jedoch auch möglich, daß die eine Gruppe nur die Vertikalbewegungen und die andere Gruppe nur die Drehbewegungen ausführt. Durch diese relativen Hub- und Drehbewegungen werden die Werkstücke von einer Gruppe von Tragelementen auf die andere und umgekehrt übergeben und so entlang der vorgesehenen Transportbahn befördert.

Da die Stäbe jeweils immer nur ein zu behandelndes Werkstück tragen, können sie ohne weiteres aus Keramik hergestellt werden. Besonderer Roste zur Aufnahme der einzelnen Chargen bedarf es nicht. Lediglich bei Schüttgut oder kleinen Werkstücken ist es zweckmäßig, das zu behandelnde Gut in kleinen Körben dem Ofen zuzuführen.

Besonders zweckmäßig ist eine Ausführungsform mit einem zusätzlichen Zwischenzylinder, der ebenfalls Stäbe besitzt. Die nach innen gerichteten Stäbe arbeiten mit den am Innenzylinder angeordneten Stäben zusammen, während die nach außen gerichtete mit den am Außenzylinder nach innen gerichteten Stäben zusammenarbeiten. Führt der Zwischenzylinder Hub- und Drehbewegungen aus, so kann ohne weiteres im Innenraum das Material z. B. Gußstücke nach oben und in der äußeren Bahn nach unten transportiert werden. Die Stäbe sind bei einer derartigen Ausführungsform nach Art einer Wendel angeordnet. Statt des Zwischenrotors können auch die Innen- und Außenzylinder Hub- und Drehbewegungen ausführen.

Da der Chargenraum in den meisten Ausführungsformen durch den inneren und äußeren Zylinder abgegrenzt ist und der Chargenraum auch gegenüber der Außenluft abgegrenzt werden kann, ist ein derartiger Ofen für Behandlungen in einer besonderen Gasatmosphäre geeignet. Bei den Ausführungen ohne Innen- oder Außenrotor kann ein zusätzlicher Mantel ohne große Schwierigkeiten angebracht werden.

Die Figuren zeigen schematische Ausführungsbeispiele der Erfindung.

Figur 1 eine Ansicht von oben auf eine Transportbahn mit radialen Stäben ;

Figur 2 einen Schnitt entlang der Linie II-II der Fig. 1 ;

Figur 3 eine der Fig. 1 ähnliche Anordnung mit radialen Stäben ;

Figur 4 einen Ofen gemäß der Erfindung im Schnitt ;

Figur 5 eine andere Ausführungsform des erfindungsgemäßen Ofens ;

Figur 6 eine andere Ausführungsform der radial verlaufenden Stäbe ;

Figur 7 einen Ofen gemäß der Erfindung mit einer doppelten Wendel ;

Figuren 8 und 9 die Anordnung von mehreren Öfen gemäß der Erfindung hintereinander.

Figuren 10a, 10b einen Schnitt entlang der Linie X-X der Fig. 3.

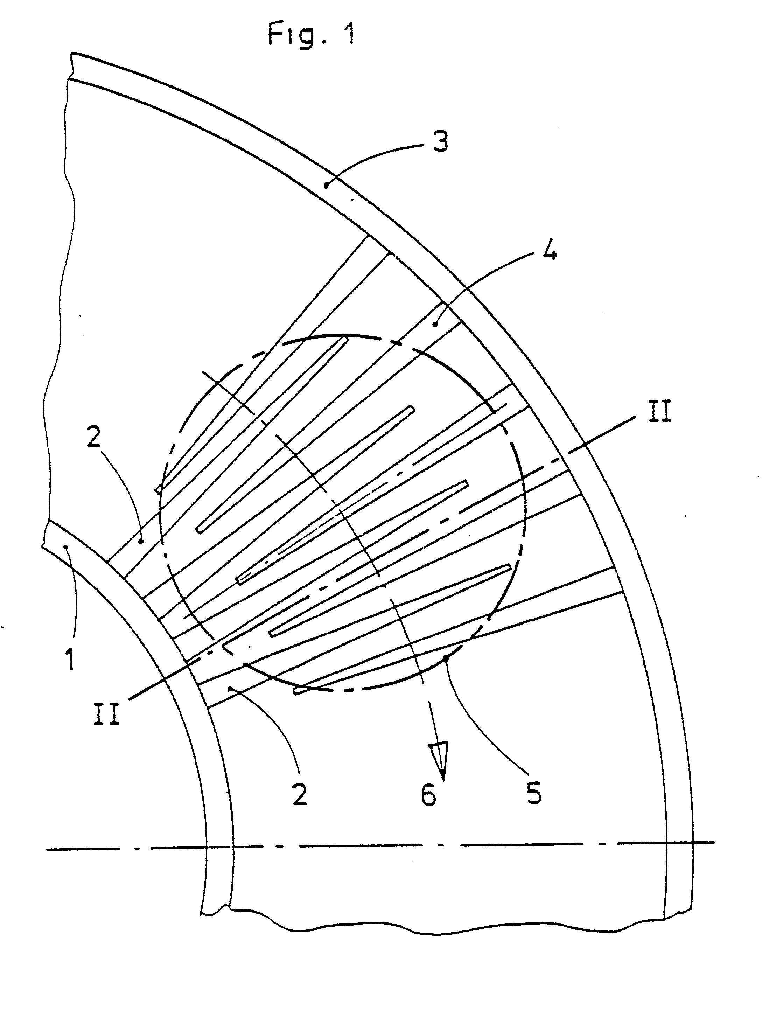

Fig. 1 zeigt einen Ausschnitt einer Förderbahn. An einem inneren Zylinder 1 sind als Tragelemente radial nach außen verlaufende mit Winkelabstand angeordnete Stäbe 2 befestigt. An einem äußeren Zylinder 3 sind ähnliche Stäbe 4 in entsprechender Anordnung befestigt, die jedoch radial nach innen laufen. Auf diesen Stäben ruht ein gestrichelt angedeutetes Werkstück 5, das beispielsweise kreisförmige Gestalt haben soll. Sofern die Stäbe 2 und 4 relativ zueinander eine Hub- und Drehbewegung ausführen, so kann dieses Werkstück 5 in Richtung des Pfeiles 6 weiterbewegt werden. Bei dieser Art der Weiterbewegung ändern sich dauernd die Auflagepunkte, so daß bei einer erfindungsgemäßen Vorrichtung nicht die Gefahr besteht, daß an den Auflagepunkten eine ungenügende Wärmebehandlung des Werkstückes 5 erfolgt.

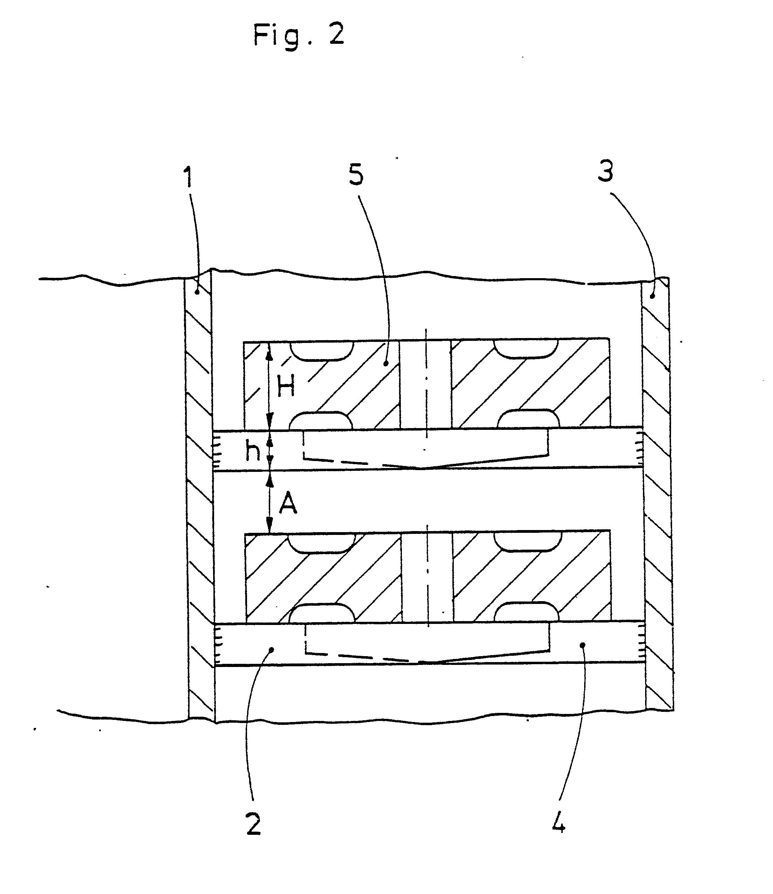

Aus dem in Fig. 2 dargestellten Schnitt entlang der Linie II-II der Fig. 1 ergibt sich die Anordnung der übereinander liegenden Förderbahnen. Die an dem inneren Zylinder 1 befestigten Stäbe 2 und die an dem äußeren Zylinder 3 befestigten Stäbe 4 tragen das Werkstück 5. Wenn das Werkstück die Höhe H besitzt und die Stäbe die Höhe h, so muß der Abstand A zwischen dem Werkstück 5 und den darüberliegenden Stäben 2 bzw. 4 größer als die Höhe h sein, damit bei der Drehbewegung sich die einzelnen Teile nicht berühren.

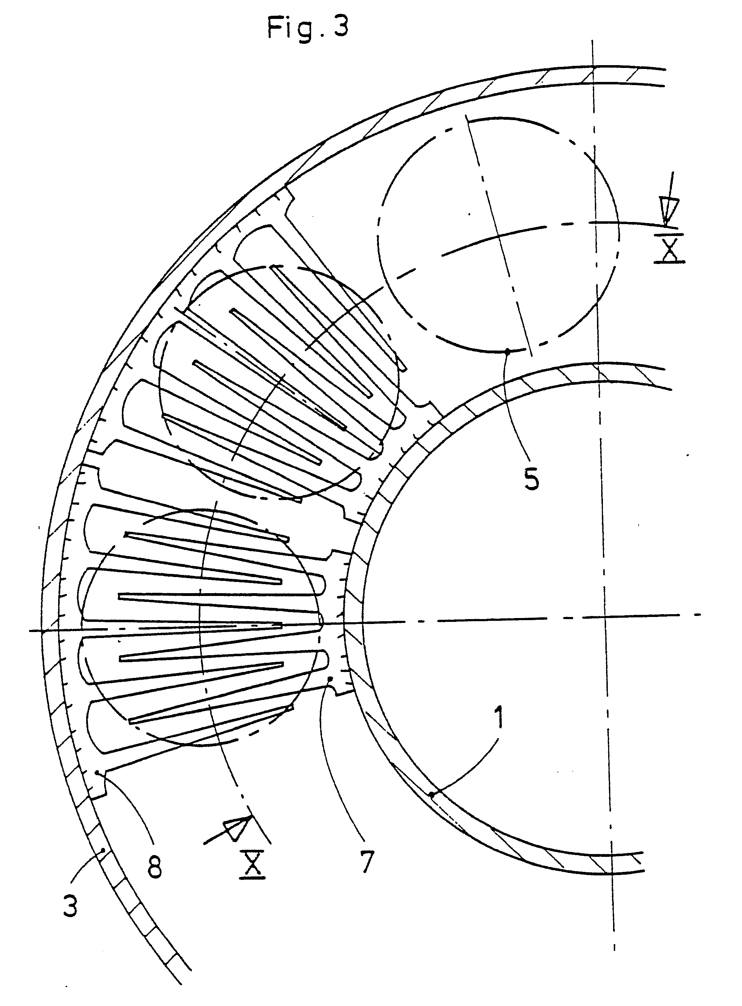

Die Fig. 3 zeigt ebenfalls einen Ausschnitt aus der Transportbahn. An dem inneren Zylinder 1 sind als Tragelemente jedoch statt der Stäbe gabelförmige Elemente 7 angeordnet, die radial nach außen zeigen und an dem äußeren Zylinder 3 sind entsprechende gabelförmige Elemente 8 befestigt, die radial nach innen zeigen. Die Funktionsweise ist die gleiche wie anhand von Fig. 1 beschrieben. Auch hier sind Werkstücke 5 gestrichelt dargestellt.

Während aus den Figuren 1 und 3 hervorgeht, daß die Transportbahn kreisringförmig ist, ist der horizontale Querschnitt des Ofens aus diesen Figuren nicht zu entnehmen. Ein kreisförmiger Querschnitt des Ofens, der der kreisringförmigen Transportbahn angepaßt ist, würde Wärmeverluste klein halten, jedoch ist die Herstellung meist schwierig. Man wird daher bei der Herstellung des Ofens eine sechseckige Form oder achteckige Form einer viereckigen Form, die auch möglich ist, vorziehen.

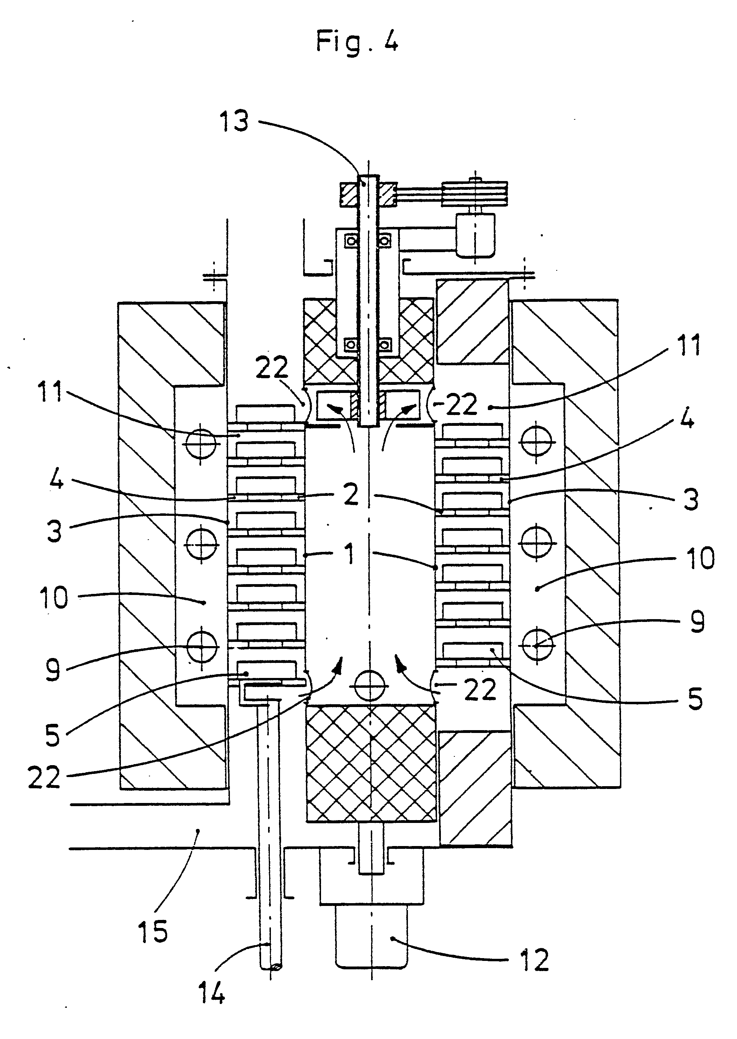

Fig. 4 zeigt einen Längsschnitt durch einen Ofen gemäß der Erfindung. An dem inneren Zylinder 1 sind wiederum radial nach außen verlaufende Stäbe 2 angeordnet. An dem äußeren Zylinder 3 sind entsprechend die radial nach innen verlaufenden Stäbe 4 befestigt. Auf diesen Stäben befinden sich Werkstücke 5. Mittels der Brenner 9 wird der Ofen aufgeheizt. Durch den äußeren Zylinder 3 kann der Verbrennungsraum 10 gegenüber dem Wärmebehandlungsraum 11 abgetrennt sein, so daß die Brenngase keinen Einfluß auf die Atmosphäre des Wärmebehandlungsraumes 11 haben können. Der innere Zylinder 1 besitzt Öffnungen 22 zur Belüftung bzw. zur Zuführung bestimmter Gase in den Behandlungsraum.

In dem hier dargestellten Ausführungsbeispiel werden die Hub- und Drehbewegungen von einem unterhalb des inneren Zylinders 1 angeordneten Motor 12 erzeugt und auf den inneren Zylinder 1 übertragen. In der oberen Befestigungsanordnung ist ein Hohlrohr 13 vorgesehen, um die Temperatur und den Sauerstoff messen zu können und um bestimmte Gase zuzuführen. Die Beschickung des Ofen erfolgt in hier nicht dargestellter Weise von oben und die Werkstücke 5 werden auf der Wendel nach unten bewegt. Dort werden sie von einer Aufnahmestange 14 übernommen und dem Transportrohr 15 zugeführt, das eine hier nicht dargestellte Transportvorrichtung zum Weitertransport der behandelten Werkstücke ins Ölbad oder in den nächsten Ofen enthält. Die Wendel kann auch bis unten weitergeführt werden, so daß die Werkstücke direkt von der letzten Wendel dem Transportrohr 15 übergeben werden können.

Verwendet man den in Fig. 4 dargestellten Ofen für eine Vergleichsrechnung mit einem Durchstoßofen und setzt man voraus, daß für die Charge ein Volumen von ca. 2 m³ vorhanden sein soll, so erhält man bei gleicher Ofenbauweise für einen Durchstoßofen ein Gesamtvolumen von 30 m³ und für einen Ofen entsprechend Fig. 4 ein Gesamtvolumen von 10 m³. Hieraus ergibt sich, daß zur Erreichung eines gleichen Chargenvolumens nur noch der dritte Teil des Ofenvolumens erforderlich ist, so daß die für die Erstellung des Ofens erforderliche Steinmenge auch auf den dritten Teil sinkt. Gleichzeitig verringert sich die erforderliche Grundfläche auf etwa die Hälfte und der Energiebedarf für den leeren Ofen, der sogenannte Leerwert, sinkt von ca. 120 kW beim Durchstoßofen auf etwa 40 kW bei einem Ofen gemäß Fig. 4, also auf den dritten Teil.

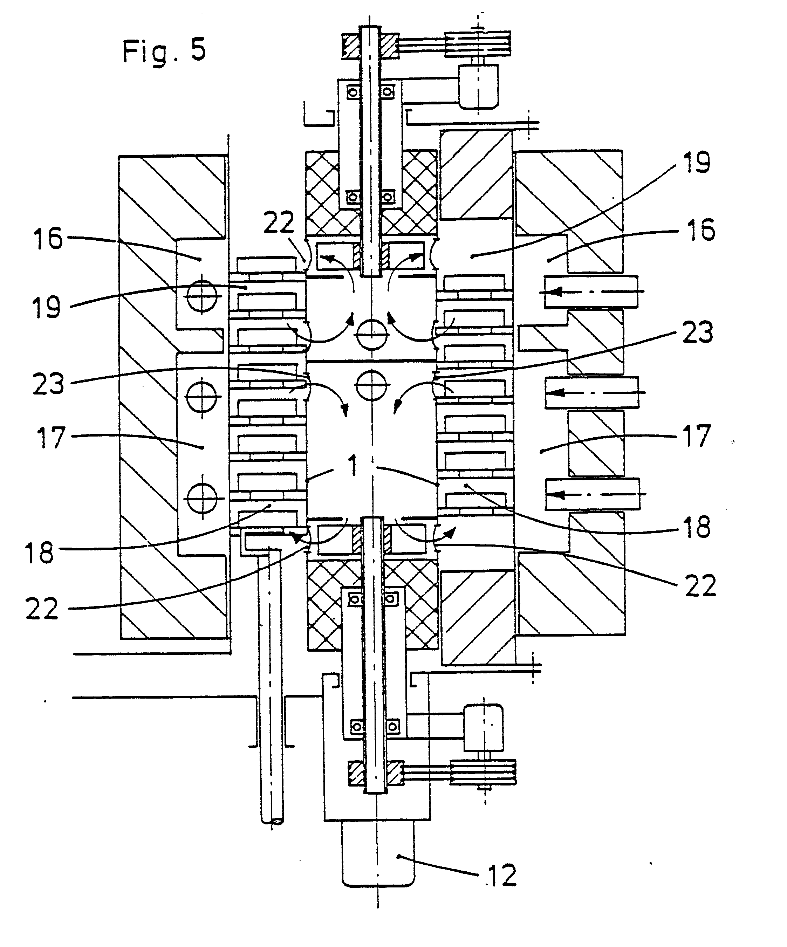

Fig. 5 zeigt eine von dem in Fig. 4 dargestellten Ausführungsbeispiel abweichende Anordnung des erfindungsgemäßen Ofens. Bei dieser Ausführungsform befindet sich der Antriebsmotor 12 zur Erzeugung der Hub- und Drehbewegungen ebenfalls unterhalb des Ofens. Dieser Ofen besitzt jedoch zwei verschiedene Heizzonen und zwar eine Aufheizzone 16 und eine Haltezone 17. Entsprechend diesen verschiedenen Aufgaben der Bereiche längs des Ofens ist auch die Belüftung des Wärmebehandlungsraumes verschieden. Der im Bereich der Haltezone 17 liegende Wärmebehandlungsraum 18 wird von unten durch eine Hohlwelle mit einer entsprechenden Gasatmosphäre versorgt, die durch die Öffnungen 22 in den Wärmebehandlungsraum 18 und durch die Öffnung 23 wieder in das Innere des inneren Zylinders 1 zurückkehrt. Die Belüftung des im Bereich der Heizzone liegenden Wärmebehandlungsraumes 19 ist ebenfalls dargestellt, da sie in ähnliche Weise erfolgt. Die Atmosphäre in dieser Aufheizzone besitzt jedoch meist eine andere Zusammensetzung als in der Haltezone bzw. der eigentlichen Wärmebehandlungszone.

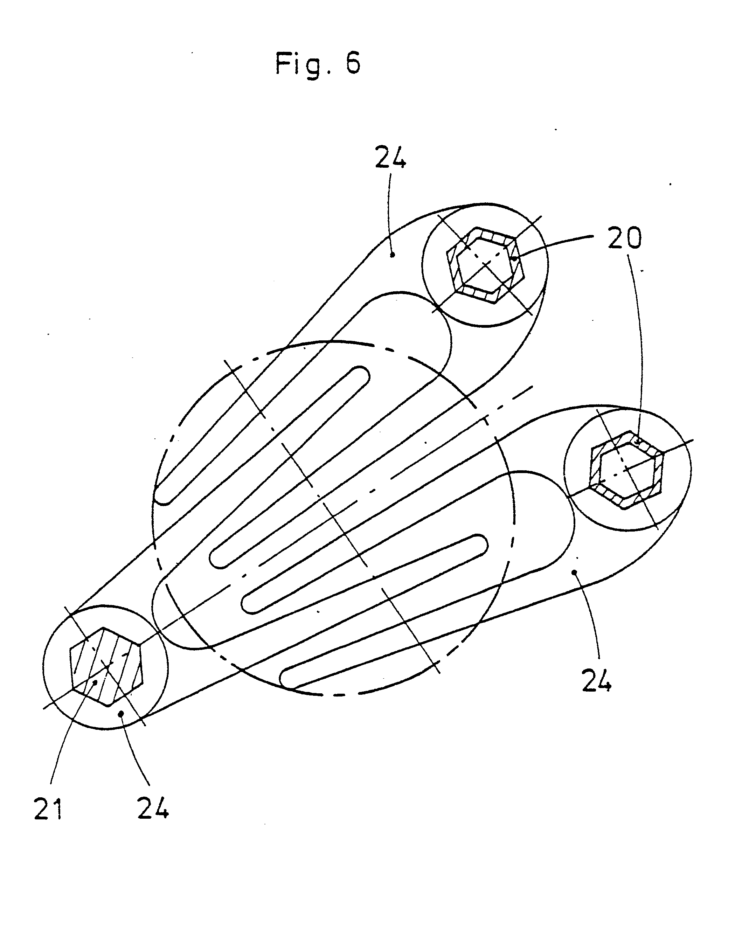

Fig. 6 zeigt eine andere Ausführung der in den Fig. 1 und 2 dargestellten Ausführungsbeispiele. Statt einer durchgehenden Zylinderwand sind hier einzelne Tragsäulen 20 und 21 vorgesehen, wobei die Tragsäule 21 sich auf einen inneren Radius und die Tragsäulen 20 auf einem äußeren Radius befinden. Die Trägsäulen haben sechseckförmigen Querschnitt und können aus Hohl- oder Vollprofilen hergestellt sein. Die gabelförmigen Elemente 24 werden auf diese Tragrohre aufgesteckt und wenn der Bereich, auf dem die Tragrohre 21 angeordnet sind, Hub- und Drehbewegungen wie bei dem Ausführungsbeispiel der Fig. 1 ausführt, so wird auch hier das zu behandelnde Werkstück weiter transportiert. Diese Ausführungsform eignet sich besonders gut für die Verwendung von keramischen Gabeln. Falls es erforderlich ist, kann eine zusätzliche Trennwand zwischen dem Wärmebehandlungsraum und dem Verbrennungsraum bzw. dem innenliegenden Raum, der zur Luftführung verwendet werden kann, vorgesehen sein. Es können auch Tragsäulen mit einer anderen Querschnittsform verwendet werden. Bei der Verwendung von Profilen mit kreisförmigem Querschnitt müssen jedoch entweder Nuten oder Rippen vorgesehen sein, die die gabelförmigen Elemente arretieren und eine Drehbewegung um die Tragsäule verhindern.

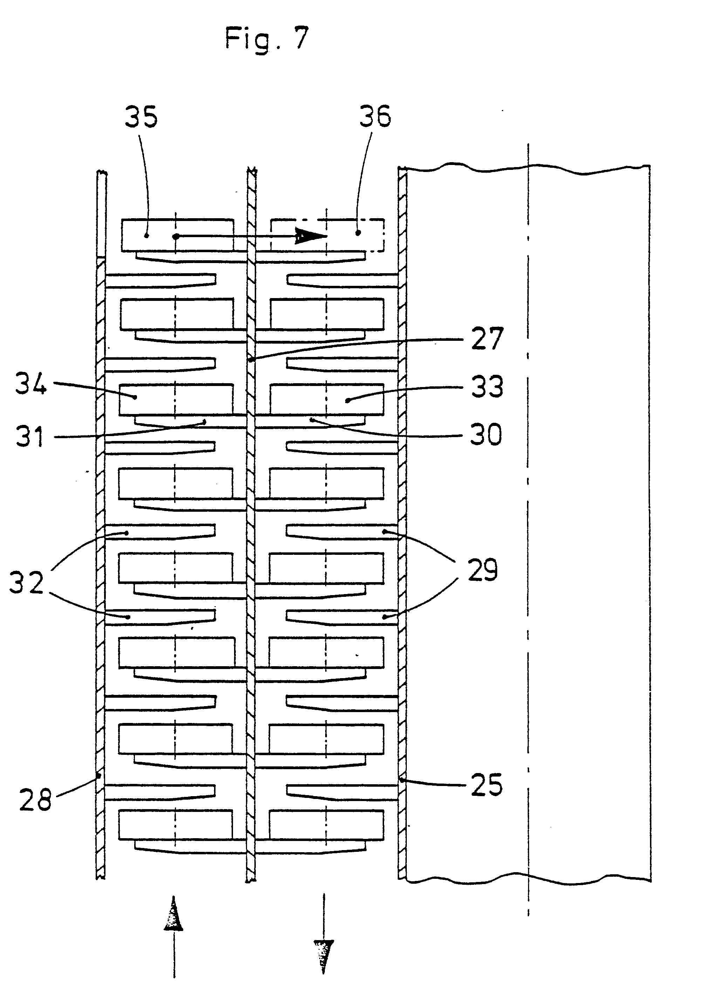

In Fig. 7 ist ein Ofen gemäß der Erfindung mit einer Doppelwendel dargestellt. An einem inneren Zylinder 25 sind ähnlich wie bei den Figuren 1 und 3 radial nach außen verlaufende Stäbe 29 befestigt. An dem äußern Zylinder 28 sind radial nach innen verlaufende Stäbe 32 angeordnet. Zwischen beiden Zylindern befindet sich ein Zwischenzylinder 27 mit radial nach innen verlaufenden Stäben 30 und radial nach außen verlaufenden Stäben 31. Die Werkteile 33 und 34 befinden sich auf den Stäben 30 bzw. 31. Dieser Zwischenzylinder 27 führt eine Drehbewegung um den gemeinsamen Drehpunkt und ebenfalls eine Hubbewegung aus. Am Ende dieser Bewegung setzt er die Werkstücke 33 auf den Stäben 29 und die Werkstücke 34 auf den Stäben 32 ab. Bei diesem Ofen werden die Werkstücke der äußeren Wendel an ihrem unteren Ende zugeführt und am unteren Ende der inneren Wendel entnommen. Am oberen Ende der beiden Wendel muß dafür gesorgt werden daß die Werkstücke 35 in die Position 36 gebracht werden und hier von der inneren Wendel erfaßt werden. Die Beschickung dieses Ofens kann auch in anderer Weise erfolgen. Es kann die innere Wendel beschickt werden und die Werkstücke werden an der äußeren entnommen. Die Beschickung kann von oben oder wie dargestellt von unten erfolgen. Der erste Teil des Weges, den das Werkstück durchläuft, dient im allgemeinen zum Aufheizen. Der übrige Teil, beispielsweise bei dem in Fig. 7 dargestellten Beispiel die innere Wendel, wird zum Halten der Temperatur verwendet.

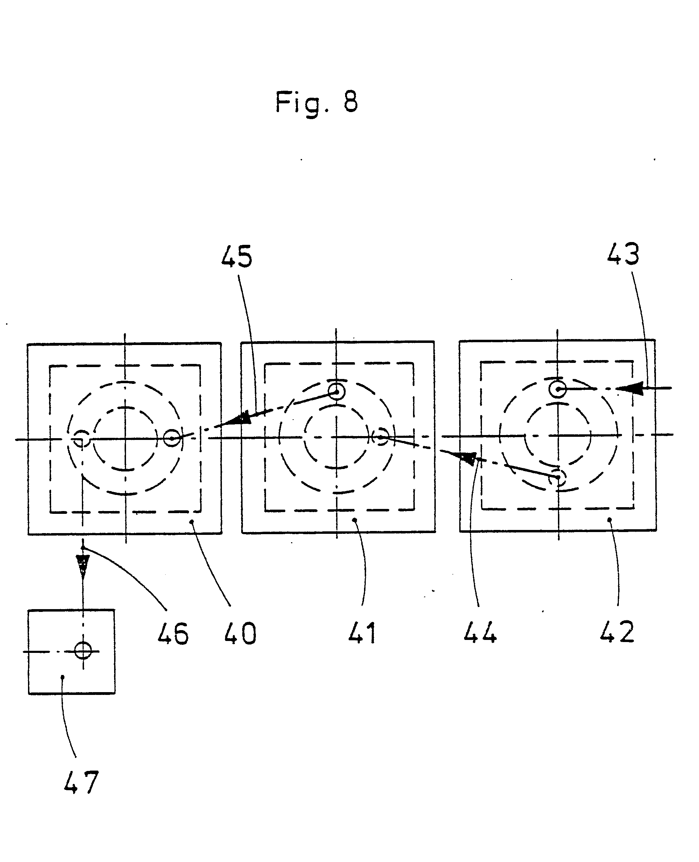

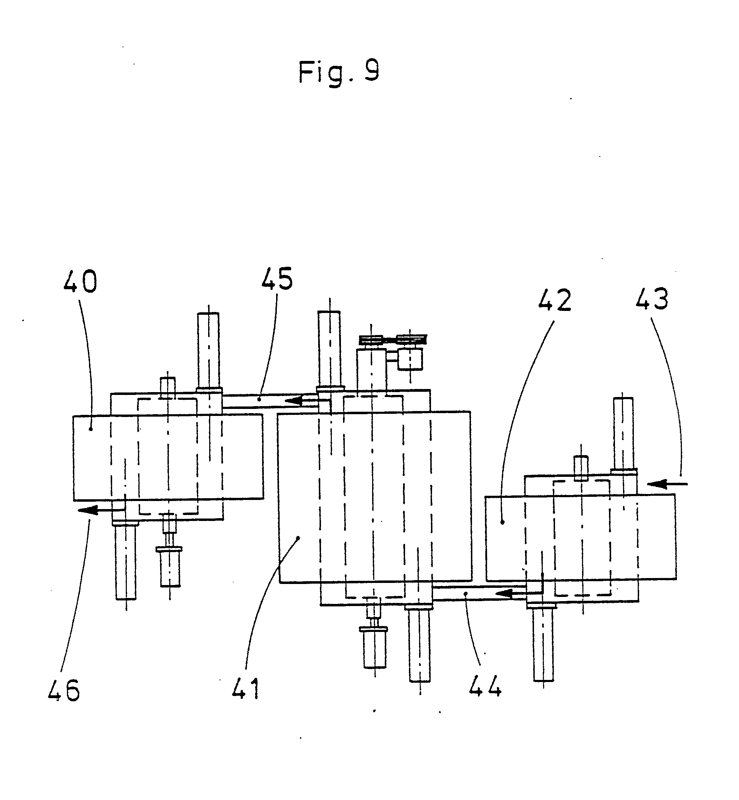

Die Fig. 8 und 9 zeigen die Verwendung mehrerer Öfen gemäß der Erfindung in einer Anlage. Der Ofen 42 dient zum Aufheizen, der Ofen 41 zum Konstanthalten der Temperatur und in dem Ofen 40 kann die Temperatur abnehmen. In dem Bad 47 können die Werkstücke gehärtet werden. Der Ofen 42 wird entsprechend dem Pfeil 43 beschickt und die am unteren Ende der Wendel austretenden Werkstücke werden über einen Kanal 44 dem Ofen 41 zugeführt. In diesem Ofen werden die Werkstücke nach oben transportiert und über den Kanal 45 dem Ofen 40 zugeführt. Nach Durchlaufen dieses Ofens verlassen die Werkstücke den Ofen 40 entsprechend dem Pfeil 46 und werden dem Härtebad 47 zugeleitet.

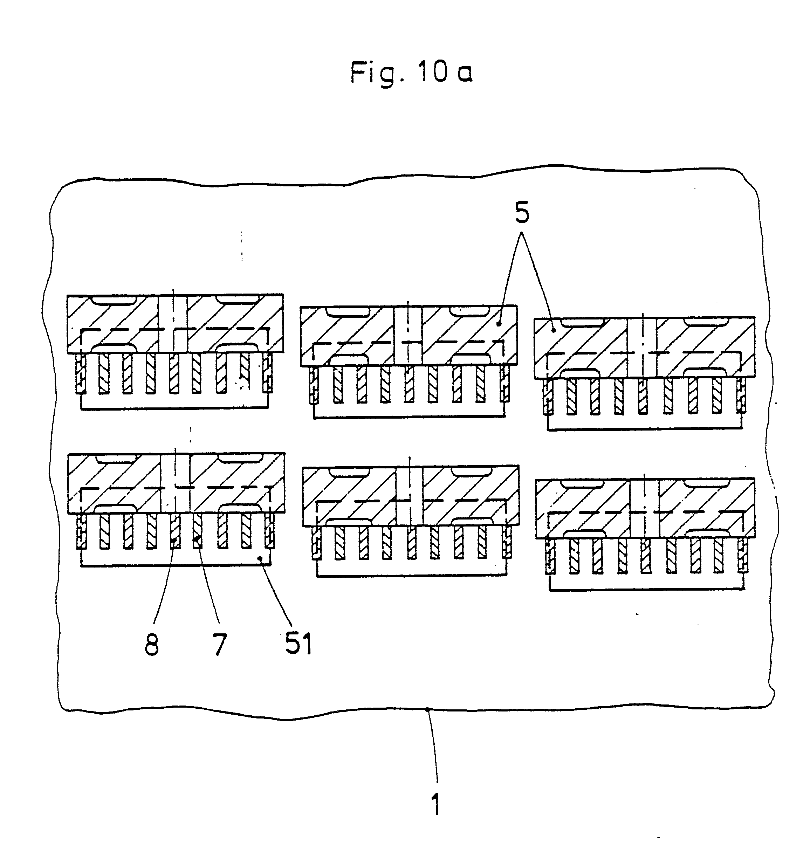

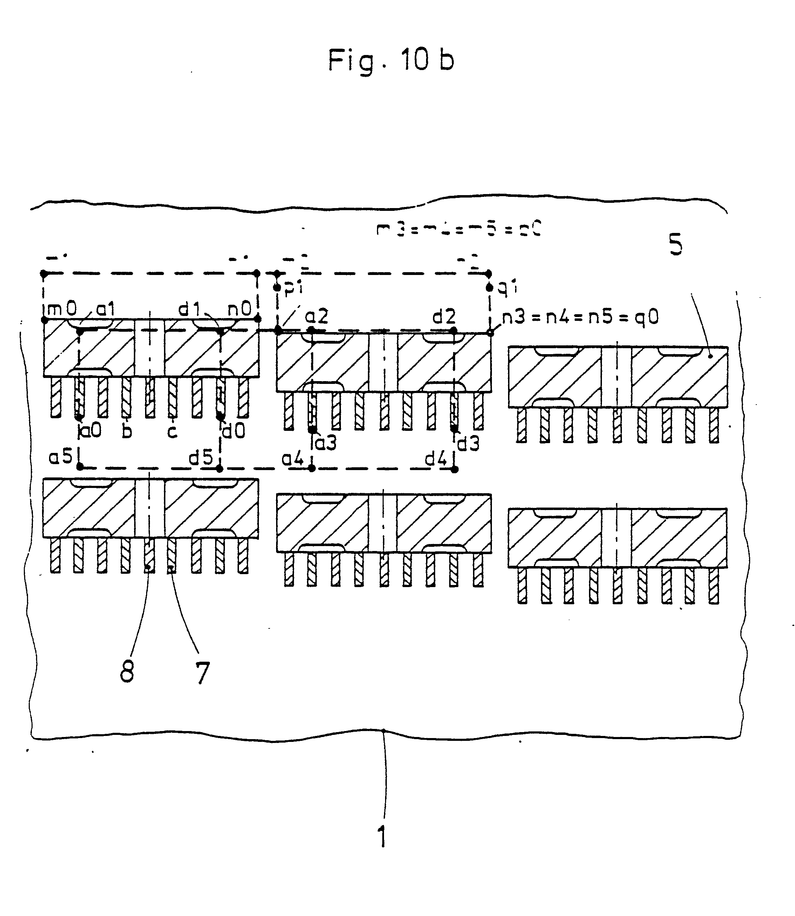

Die Figuren 10a und 10b zeigen einen Schnitt entlang der Linie X-X in Fig. 3. In Fig. 10a ist zu erkennen, daß auf der abgewickelten Wand 1 des inneren Zylinders die gabelförmigen Elemente 7 befestigt sind. Die Befestigungsteile 51, die man auch als Flansche bezeichnen kann, tragen auf der nicht der Wand zugeordneten Seite die strahlförmig ausgebildeten Tragelemente 7. Von diesen Tragelementen 7 und den an dem äußeren Zylinder 3 befestigten Tragelementen 8 werden die Werkstücke 5 weiterbefördert. Bei einer derartigen Transportbewegung führt der Innenzylinder mit den an ihm befestigten Tragelementen eine Hub- und Drehbewegung aus, während der Außenzylinder 3 nicht bewegt wird.

Diese Hub- und Drehbewegung und der gleichzeitige Transport der Werkstücke 5 sei anhand der Fig. 10b erläutert. Bei Beginn der Hub-Drehbewegung befinden sich alle Tragelemente in der dargestellten Ruhelage. Die mit dem Innenzylinder verbundenen Tragelemente 7 sind bei dem linken oberen Teil mit den a bis d bezeichnet. Jeweils die Bewegung der unteren Begrenzung sei nachfolgend beschrieben. Im Zeitpunkt null befinden sich die Elemente in der durch den Punkt dargestellten Ruhelage a0 und d0, während sich das Werkstück 5 links oben auf den Tragelementen 7 und 8 abstützt und der linke obere Punkt, der mit m und der rechte obere Punkt, der mit n bezeichnet werden soll, sich in den Ruhelage m0 und n0 befinden. Bei der folgenden Hubbewegung werden alle Werkstücke gehoben bzw. bei der Drehbewegung gedreht, während nachfolgend nur auf die Bewegung des linken oberen Werkstücks eingegangen werden soll. Nach Beginn der Hubbewegung befinden sich die unteren Begrenzungen der Tragelemente in den Punkten a1 und d1, während sich die oberen Ecken des Werkstückes 5 sich in den Punkten m1 und n1 befinden. Bei der folgenden Drehbewegung schwenken die Stäbe a bis d nach rechts und nehmen das Werkstück 5 gleichzeitig mit. Die Drehbewegung endet, wenn sich die unteren Begrenzungen der Stäbe a bis d in den Punkten a2 und d2 bzw. die oberen Punkte des Werkstückes an den Stellen m2 und n2 befinden. Bei der folgenden Absenkung der Tragelemente 7 werden die Werkstücke 5 von den Tragelementen 8, die mit dem äußeren Zylinder verbunden sind, übernommen, sobald die Tragelemente 7 die Punkte a3 und d3 erreichen. Gleichzeitig befinden sich sich die oberen Ecken des Werkstückes 5 in den Punkten m3 und n3. Die Tragelemente 7 senken sich weiter, bis sie die Punkte a4 und d4 erreicht haben. Jetzt setzt eine Drehbewegung ein, die die Stäbe nach links verschwenkt, bis sie die Punkte a5 und d5 erreicht haben. Die Schwenkbewegung endet jetzt und es erfolgt wieder eine Hubbewegung und der Zyklus beginnt wieder von vorne, sobald die Stäbe die Punkte a0 und d0 erreicht haben. Während dieser Zeit, d. h. vom Verlassen der Punkte a3 und d3 bis zum Erreichen der Punkte a0, d0 wird das Werkstück 5 unverändert von den Tragelementen 8 getragen. Die obere Eckpunkte sind also für die Zeitpunkte m3, m4, m5 und p0 bzw. n3, n4, n5 und q0 identisch. Bei der nun folgenden Hubbewegung wird das mittlere Werkstück nur bis zu dem Punkt p1 und q1 gehoben, da es jetzt in die rechts tiefer liegende Position weitertransportiert wird.

Die Fig. 10a und 10b zeigen eine treppenförmige Anordnung der Tragelemente. Statt einer derartigen Anordnung können natürlich auch die Stäbe stetig angeordnet sein. Bei der Verwendung von gabelförmigen Bauelementen bietet es sich jedoch an, diese derartig anzuordnen, daß eine treppenförmige Anordnung entsteht.

Die in den Fig. 1 bis 9 dargestellten Öfen zeigen nur Ausführungsbeispiele der Erfindung dar. Beispielsweise ist es ohne weiteres möglich, für den Transport von oben nach unten Rollen vorzusehen, auf denen die Chargen durch ihr Eigengewicht sich nach unten bewegen können. Besondere Stäbe müssen nicht vorgesehen sein.

Statt der in den Fig. 8 und 9 dargestellten Kanäle am jeweiligen Eintritt und Austritt des Ofens anzuordnen, können diese auch bei einem Ofen entsprechend Fig. 5 von der Heizzone 16 oder von der Temperaturhaltezone 17 ausgehen. Es können dann verschiedene Erwärmungskurven oder Temperaturerhaltungskurven erreicht werden.

Um einen größeren Durchsatz zu erreichen, können bei dem in Fig. 7 dargestellten Ofen mit zwei Wendeln diese derart angeordnet sein, daß die Transportrichtung in beiden Wendeln gleichsinnig erfolgt, d. h. nach oben oder in beiden nach unten.

**Patentansprüche**

1. Ofen zur Wärmebehandlung von Werkstücken (5), bei dem in einem Wärmebehandlungsraum (18, 19) eine etwa kreisringförmige Transportbahn mit bewegbaren Tragelementen (2, 4) konzentrisch um eine Vertikalachse angeordnet ist, wobei die Werkstücke während der Wärmebèhandlung unter Auflage auf den Tragelementen entlang der Transportbahn transportiert werden, dadurch gekennzeichnet, daß wenigstens zwei Gruppen (2 und 4) von etwa stabförmigen Tragelementen an verschiedenen Trägeranordnungen (1 und 3) befestigt und derart angeordnet und verteilt sind, daß sie wenigstens eine wendelförmige Transportbahn mit vertikaler Zentralachse bilden, und daß die beiden Trägeranordnungen mit den ihnen jeweils zugeordneten Tragelementen sowohl vertikal als auch in Umfangsrichtung (6) der wendelförmigen Transportbahn relativ zueinander derart bewegbar sind, daß die Werkstücke abwechselnd von Tragelementen (2) der einen Gruppe und Tragelementen (4) der anderen Gruppe abgestützt und schrittweise entlang der Transportbahn transportiert werden.

2. Ofen nach Anspruch 1, dadurch gekennzeichnet, daß die stabförmigen Tragelemente (2) der einen Gruppe entlang eines Innenradius der Transportbahn an der zugehörigen Trägeranordnung (1) befestigt sind und etwa radial nach außen verlaufen und die stabförmigen Tragelemente (4) der anderen Gruppe im Bereich eines Außenradius der Transportbahn an der zugehörigen Trägeranordnung (3) befestigt sind und etwa radial nach innen verlaufen.

3. Ofen nach Anspruch 2, dadurch gekennzeichnet, daß die Stäbe (2, 4) in kreis- oder kreissektorförmiger Verteilung angeordnet und wenigstens im Bereich ihrer freien Endabschnitte beabstandet sind und daß die Lücken zwischen benachbarten Stäben (2 oder 4) einer Gruppe größer sind als die Breite der Stäbe (4 oder 2) der anderen Gruppe, so daß die Stäbe der einen Gruppe vertikal zwischen den Stäben der anderen Gruppe durchführbar sind.

4. Ofen nach einem der Ansprüche 1 bis 3, dadurch gekennzeichnet, daß stabförmige Tragelemente (2, 4) in mehreren Ebenen übereinander angeordnet sind.

5. Ofen nach einem der Ansprüche 1 bis 4, dadurch gekennzeichnet, daß die stabförmigen Tragelemente (29, 30, 31, 38) so angeordnet sind, daß sie eine doppelgängige Schraubenwendel bilden, wobei die beiden Wendel entweder vertikal entgegengerichtet (Fig. 7) oder beide aufwärts fördern.

6. Ofen nach einem der Ansprüche 1 bis 5, dadurch gekennzeichnet, daß eine Gruppe der stabförmigen Tragelemente (2, 4) sowohl vertikal als auch in Umfangsrichtung der Transportbahn bewegbar und die andere Gruppe feststehend angeordnet ist.

7. Ofen nach einem der Ansprüche 1 bis 5, dadurch gekennzeichnet, daß eine Trägeranordnung (1) mit der ihr zugeordneten Gruppe von Tragelementen (2) vertikal bewegbar und die andere Trägeranordnung (2) mit zugehöriger Gruppe von Tragelementen (4) in Umfangsrichtung der Transportbahn bewegbar angeordnet ist.

8. Ofen nach einem der Ansprüche 1 bis 7, dadurch gekennzeichnet, daß die Trägeranordnungen jeweils als Trägerzylinder (1, 3 ; 25, 27, 28) mit vertikaler Zylinderdrehachse ausgebildet sind.

9. Ofen nach einem der Ansprüche 1 bis 7, dadurch gekennzeichnet, daß die Trägeranordnungen neben der Transportbahn vertikal angeordnete Säulen (20, 21) aufweisen, an denen die stabförmigen Tragelemente (24) drehfest gehaltert sind.

10. Ofen nach einem der Ansprüche 5 bis 9, dadurch gekennzeichnet, daß mit Abstand zu einem vertikalen Innenzylinder (25) und einem Außenzylinder (28) eine zylindrische Zwischenwand (27) konzentrisch zur Vertikalachse angeordnet ist, daß an den Innen- und Außenzylindern (25, 28) jeweils eine Gruppe von radialen stabförmigen Tragelementen (29, 32) angeordnet ist und daß die Zwischenwand zwei Gruppen von radial nach innen und nach außen weisenden stabförmigen Tragelementen (30, 31) trägt, die zusammen mit den beiden anderen Gruppen zwei konzentrische wendelförmige Förderbahnen bilden.

11. Ofen nach Anspruch 10, dadurch gekennzeichnet, daß die zylindrische Zwischenwand (27) sowohl vertikal als auch in Umfangsrichtung bewegbar und angetrieben ist.

12. Ofen nach einem der Ansprüche 1 bis 11, dadurch gekennzeichnet, daß mehrere etwa radial angeordnete stabförmige Tragelemente (7, 8) gabelförmig zusammengeschlossen sind.

13. Ofen nach einem der Ansprüche 1 bis 12, dadurch gekennzeichnet, daß ein Antrieb (12) für die Vertikal- und Drehbewegungen der Tragelemente (2, 4) am oberen oder unteren Ende des Ofens angeordnet ist.

**Claims**

1. A furnace for the heat treatment of workpieces (5) comprising a substantially circular transport path with mobile support elements (2, 4) arranged concentrically around a vertical axis in a heat treatment chamber (18, 19), said workpieces resting on said support elements being moved along said transport path during said heat treatment characterized in that at least two groups (2 and 4) of substantially bar-shaped support elements each mounted to mounting means (1 and 3) are arranged and distributed so that said support elements form at least one helical transport path around said vertical central axis and in that said two mounting means and their associated support elements are mobile relative to each other both in the vertical direction and in the direction of the circumference (6) of said helical transport path so that said workpieces are alternately supported by support elements (2) of one group and support elements (4) of the other group and are moved step by step along said transport path.

2. A furnace according to claim 1 characterized in that said substantially bar-shaped support elements (2) of one of said two groups are mounted to said associate mounting means (1) along an inner radius of said transport path, said support elements (2) projecting substantially radially outward and in that said substantially bar-shaped support elements (4) of said second group are mounted to said associated mounting means (3) along an outer radius of said transport path, said support elements projecting substantially radially inward.

3. A furnace according to claim 2 characterized in that said bars (2, 4) are arranged in a substantially circular or sectorial distribution and are spaced relative to each other at least at their end portions and in that the gaps between adjoining bars (2 or 4) of one group are wider than the widths of the bars (4 or 2) of the other group thereby allowing the vertical passage of bars of one group between the bars of the other group.

4. A furnace according to any one of claims 1 through 3 characterized in that said substantially bar-shaped support elements (2, 4) are arranged in several vertical planes.

5. A furnace according to any one of claims 1 through 4 characterized in that said substantially bar-shaped support elements (29, 30, 31, 38) are arranged to form a double-threaded helical transport path, the direction of transport of said two threads being opposite to each other in the vertical plane (Fig. 7) or being upward for both such threads.

6. A furnace according to any one of claims 1 through 5 characterized in that the substantially bar-shaped support elements (2, 4) of one of said two groups of support elements are mobile both in the vertical direction and in the direction of the circumference of said transport path and in that the support elements of the other group are fixed.

7. A furnace according to any one of claims 1 through 5 characterized in that one mounting means (1) with its associated support elements (2) is mobile in the vertical direction and in that the other mounting means (2) with its associated support elements (4) is mobile in the direction of the circumference of said transport path.

8. A furnace according to any one of claims 1 through 7 characterized in that each of said mounting arrangements comprises a mounting cylinder (1, 3 ; 25, 27, 28) with a vertical axis of cylinder rotation.

9. A furnace according to any one of claims 1 through 7 characterized in that said mounting arrangement comprises vertical columns (20, 21) arranged adjacent to said transport path, said substantially bar-shaped support elements (24) being firmly secured to said columns in a manner preventing the rotation of said elements.

10. A furnace according to any one of claims 5 through 9 characterized in that a cylindrical inner wall is arranged concentrically around said vertical axis at a distance from a vertical inner cylinder (25) and a vertical outer cylinder (28) and in that groups of radially projecting bar-shaped support elements (29, 32) are mounted to said inner and outer cylinders (25, 28) and in that said inner wall carries substantially bar-shaped support elements (30, 31) protruding radially inward and outward respectively and thereby forming two concentric helical transport paths together with said other two groups of substantially bar-shaped support elements (29, 32).

11. A furnace according to claim 10 characterized in that said cylindrical inner wall (27) is mobile both in the vertical and in the circumferential directions and may be moved by appropriate driving means.

12. A furnace according to any one of claims 1 through 11 characterized in that several bar-shaped support elements (7, 8) projecting substantially radially are combined to form a forkshaped support means.

13. A furnace according to any one of claims 1 through 12 characterized in that a driving means (12) for the vertical or rotational movement of said support elements (2, 4) is arranged in the upper or the lower part of said furnace.

**Revendications**

1. Four pour le traitement thermique de pièces d'œuvre (5), comprenant une voie de transport pratiquement circulaire munie d'éléments porteurs mobiles (2, 4), ladite voie de transport étant située dans une chambre de traitement thermique et se trouve disposée de façon concentrique autour d'un axe vertical, lesdites pièces d'œuvre étant transportées le long de ladite voie de transport en restant sur lesdits éléments porteurs mobiles, caractérisé par le fait qu'au moins deux groupes (2 et 4) d'éléments porteurs ayant pratiquement la forme de barreaux sont fixés sur différents supports (1 et 3) et qu'ils sont disposés et répartis de manière à former autour d'un axe central vertical au moins une voie de transport hélicoïdale et que les deux supports munis de leurs éléments porteurs respectifs peuvent·mouvoir l'un par rapport à l'autre tant dans le sens vertical que dans le sens circonférentiel de façon à ce que lesdites pièces d'œuvre soient soutenues à tour de rôle par les éléments porteurs (2) de l'un des groupes et les éléments porteurs (4) de l'autre des groupes pour être acheminées pas à pas le long de la voie de transport.

2. Four selon la revendication 1, caractérisé par le fait que les éléments porteurs en forme de barreaux (2) de l'un des groupes sont fixés en porte-à-faux sur leur support (1), celui-ci formant un rayon intérieur de la voie de transport, et que les éléments porteurs en forme de barreaux (4) de l'autre groupe sont fixés en porte-à-faux sur leur support (3), celui-ci formant un rayon extérieur de la voie de transport, de façon que les premiers vont en direction radiale vers l'extérieur et les seconds en direction radiale vers l'intérieur de la voie de transport pratiquement circulaire.

3. Four selon la revendication 2, caractérisé par le fait que les barreaux (2, 4) sont disposés en forme de cercle ou de section de cercle de façon à pratiquer au moins dans la zone de leurs extrémités en porte-à-faux un espace libre, ledit espace libre entre barreaux voisins (2 ou 4) d'un des groupes étant supérieur à la largeur des barreaux (4 ou 2) de l'autre groupe pour permettre ainsi le passage dans le sens vertical des barreaux de l'un des groupes entre ceux de l'autre groupe.

4. Four selon l'une des revendications 1 à 3, caractérisé par le fait que les éléments porteurs en forme de barreaux (2, 4) sont disposés à plusieurs niveaux les uns au-dessus des autres.

5. Four selon l'une des revendications 1 à 4, caractérisé par le fait que les éléments porteurs en forme de barreaux (29, 30, 31, 38) sont disposés de façon à former une double spirale, les deux spirales évoluant verticalement soit toutes les deux vers le haut, soit l'une vers le haut et l'autre vers le bas (fig. 7).

6. Four selon l'une des revendications 1 à 5, caractérisé par le fait que l'un des groupes d'éléments porteurs en forme de barreaux (2, 4) est mobile tant verticalement que circonférentiellement par rapport à la voie de transport pendant que l'autre groupe est installé à fixe.

7. Four selon l'une des revendications 1 à 5, caractérisé par le fait que l'un des supports (1), y compris le groupe d'éléments porteurs (2) dont il est équipé peut mouvoir verticalement tandis que l'autre support (3), y compris le groupe d'éléments porteurs (4) dont il est équipé est disposé de façon à permettre son mouvement dans le sens de la circonférence de la voie de transport.

8. Four selon l'une des revendications 1 à 7, caractérisé par le fait que lesdits supports sont conçus sous forme de cylindres porteurs (1, 3, 25, 27, 28) à axe vertical rotatif.

9. Four selon l'une des revendications 1 à 7, caractérisé par le fait que les supports sont tenus par des montants verticaux (20, 21) disposés à côté de la voie de transport, montants auxquels les éléments porteurs en forme de barreaux (24) sont fixés de façon à éviter tout mouvement rotatif.

10. Four selon l'une des revendications 5 à 9, caractérisé par le fait qu'à une distance donnée entre un cylindre vertical intérieur (25) et un cylindre extérieur (28) est disposée une cloison cylindrique (27) concentrique par rapport à l'axe vertical, que lesdits cylindres intérieurs et extérieurs (25, 28) sont chacun munis d'un groupe d'éléments porteurs en forme de barreaux (29, 32) disposés en direction radiale et que ladite cloison porte deux groupes d'éléments porteurs en forme de barreaux (30, 31) disposés en direction radiale vers l'extérieur respectivement vers l'intérieur, les deux groupes d'éléments porteurs fixés sur la cloison formant avec les deux autres groupes d'éléments porteurs fixés sur les deux cylindres deux voies de transport hélicoïdales disposées concentriquement l'une par rapport à l'autre.

11. Four selon la revendication 10, caractérisé par le fait que la cloison cylindrique (27) est entraînée et peut se déplacer tant dans le sens vertical que circonférentiel.

12. Four selon l'une des revendications 1 à 11, caractérisé par le fait que plusieurs éléments porteurs en forme de barreaux disposés d'une façon pratiquement radiale (7, 8) sont connectés en dents de fourchette.

13. Four selon l'une des revendications 1 à 12, caractérisé par le fait qu'un entraînement (12) impartant aux éléments porteurs (2, 4) leurs mouvements verticaux et rotatifs est disposé à l'extrémité supérieure ou inférieure du four.

## Fig. 1

# Fig. 2

## Fig. 3

# Fig. 4

# Fig. 5

Fig. 6

## Fig. 7

Fig. 8

45    43

46  40    41    44    42

47

Fig. 9

Fig. 10 a

Fig. 10 b